# EUROPEAN PATENT SPECIFICATION

(11) **EP 4 417 959 B1**
(45) Date of publication and mention of the grant of the patent: **07.05.2025**
(21) Application number: 23156502.9
(22) Date of filing: 14.02.2023
(51) Int. Cl.: G01M 17/10, B61K 9/12

(54) **AN UNDERFLOOR WHEELSET INSPECTION DEVICE AND A METHOD FOR PROBING RAILWAY VEHICLE WHEELSETS USING THE UNDERFLOOR WHEELSET INSPECTION DEVICE**
UNTERFLURRADSATZPRÜFVORRICHTUNG UND VERFAHREN ZUM PRÜFEN VON SCHIENENFAHRZEUGRADSÄTZEN UNTER VERWENDUNG DER UNTERFLURRADSATZPRÜFVORRICHTUNG
DISPOSITIF D'INSPECTION D'ESSIEUX AU SOL ET PROCÉDÉ DE SONDAGE D'ESSIEUX DE VÉHICULE FERROVIAIRE UTILISANT LE DISPOSITIF D'INSPECTION D'ESSIEUX AU SOL

(43) Date of publication of application: 21.08.2024
(60) Divisional application: 24209934.9
(73) Proprietor: DTEC GmbH, 61191 Rosbach v.d. Höhe (DE)
(72) Inventor: PENG, Chaoyong, 61440 Oberusel (DE); ZHANG, Yu, 61440 Oberusel (DE); GUO, Jianguang, 61352 Bad Homburg v.d. Höhe (DE); ZHANG, Zhaoyuan, 61169 Friedberg (DE)
(74) Representative: Keil & Schaafhausen Patentanwälte PartGmbB

(56) References cited:
- EP-B1- 2 631 151
- CN-A- 103 868 991
- US-A1- 2019 367 057

## Description

The present invention relates to an underfloor wheelset inspection device for inspecting the wheelsets of a railway vehicle. Further, the invention relates to a method for probing said wheelsets of a railway vehicle using the underfloor wheelset inspection device.

Rail vehicles are exposed to great demands during operation. These can result, for example, from a high mileage. On the other hand, reliability of the rail vehicles is required to ensure efficient operation. Particular attention is paid to the components of the bogies, especially the wheelsets consisting of two opposing wheels connected by a common axle. Since the wheelsets interact directly with the rail, they are subjected to high mechanical stress during operation. This results in wear of the wheel's running tread. Furthermore, internal cracks of the wheel or local damages to the running tread can occur. To become aware of a worn running tread or local damage at an early stage and thus, if necessary, to be able to replace a wheelset before complete failure, regular inspections of the wheelsets by means of underfloor wheelset inspection devices are provided for regularly. These are inspection devices located in a maintenance section of the track area below the rails, i.e. in an underfloor section, to allow direct access to the wheelsets of the bogies.

For this purpose, underfloor wheelset inspection devices have been devised in the prior art, which are used for the routine inspection of the wheelsets. These comprise a lifting device which is designed to lift the at least two wheelsets of a rail vehicle off the rail and once lifted to rotate the wheels. Furthermore, the inspection device comprises a movable robotic arm at the end of which an ultrasonic probe is arranged. The movable robotic arm is dimensioned and arranged in the inspection device such that it can move the probe to each of the four wheels of the wheelsets. The movements of the movable robotic arm and the probing of the wheels are controlled by a control unit that is operatively connected to the movable robotic arm. Furthermore, both the lifting device and the movable robotic arm are stationary. During operation, the underfloor wheelset inspection device lifts the wheelsets off the rail, the control unit operates the movable robotic arm such that the probe is moved consecutively to each of the four wheels. When the probe is in a probing position in proximity to the running tread of a wheel, the lifting device rotates the wheel. Once all wheels have been inspected, the wheelsets are lowered back onto the rail.

The design of the underfloor wheelset inspection device according to the prior art requires that the four wheels must be inspected individually one after the other, which is a time-consuming procedure. Further, in the event of the movable robotic arm becoming defective, the underfloor wheelset inspection device cannot continue its operation. Further still, as the movable robotic arm is required to reach a probing position near each of the four wheels and the movable robotic arm is connected to the ground it cannot easily adjust to an increase in distance between the wheelsets as required for example in the case of different bogie designs.

CN 103 868 991 A discloses a double-manipulator rail vehicle ultrasonic double-wheel flaw detection machine. The detection machine comprises a trolley with a portal frame, a lifting frame, a tread probe manipulator, and a rim probe manipulator, wherein the trolley is movable.

Thus, taking above-mentioned deficiencies into consideration, it is an object of the present invention to provide an underfloor wheelset inspection device with improved efficiency and reliability.

This object is solved by the underfloor wheelset inspection device according to claim 1 and the method for probing railway vehicles according to claim 4. Preferred embodiments of the invention are evident from the dependent claims.

The underfloor wheelset inspection device is a device for inspecting a first wheelset and a second wheelset of a railway vehicle, each wheelset comprising a right wheel and a left wheel connected by an axle. The underfloor wheelset inspection device comprises: a control unit, a first wheelset inspection unit for the first wheelset and a second wheelset inspection unit for the second wheelset, each of the wheelset inspection units comprising: a first wheel lifting unit configured to lift and rotate the left wheel of the corresponding wheelset; a second wheel lifting unit configured to lift and rotate the right wheel of the corresponding wheelset; and a probe unit comprising a sensor and a movement device for moving the sensor between a left sensing position in proximity to a running tread of the left wheel when lifted by the first wheel lifting unit for probing the running tread of the left wheel and a right sensing position in proximity to a running tread of the right wheel when lifted by the second wheel lifting unit for probing the running tread of the right wheel, wherein the control unit is operatively connected to the first wheelset inspection unit and to the second wheelset inspection unit and wherein the control unit is suitable and set up to operate both probe units simultaneously to perform a probing (sampling) of the running tread of a wheel.

The underfloor wheelset inspection device according to the invention thus has two separate wheelset inspection units, each of which can separately inspect the left wheel and right wheel of a wheelset. Since the two wheelset inspection units are controlled simultaneously by the control unit, two wheels, i.e. a wheel of the first wheelset and a wheel of the second wheelset, can be inspected at the same time. By parallelizing the inspection process as described above, the time required for inspecting all four wheels of two wheelsets can be reduced. Further, assigning one inspection unit to each wheelset eliminates the requirement that the movement device must be designed such that it can reach each wheel of the two wheelsets, i.e. is capable of moving the probe unit close to the running tread of all four wheels. This enables a compact design of the movement device.

The first wheelset and the second wheelset may belong to the same bogie of the railway vehicle. The first wheelset and the second wheelset may also belong to different bogies of the railway vehicle. Typically the first wheelset and the second wheelset are arranged one after the other in a direction perpendicular to the axles. The distance between the first wheelset and the second wheelset may be up to 20 meters, preferably may be up to 10 meters.

The direction perpendicular to the axles of the wheelsets may be referred to as rail direction.

The first wheelset inspection unit and the second wheelset inspection unit may be arranged one after the other along the rail direction. The second wheelset inspection unit may be displaced from the first wheelset inspection unit in the rail direction by a longitudinal distance. For example, the longitudinal distance may correspond to an axle spacing of two axles of the same bogie.

The control unit may comprise a data storage unit, a processing unit and a communication interface. The data storage unit may be set up to store an operating routine suitable to control the movement device to perform probing of the running tread of a wheel. The processing unit may be a microprocessor configured to load said operating routine from the data storage unit, to execute the routine, and to communicate with the first wheelset inspection unit and the second wheelset inspection unit by means of the communication interface. Communication between the control unit and the wheelset inspection units may be established by means of a wired connection and/or a wireless connection. The control unit may also be further configured to receive data generated by the probe unit. The control unit may be also set up to store said data in the data storage unit.

The control unit may comprise an operating station with a user terminal. The operating station may be an integral part of the control unit or may be a separate terminal which is connected to the control unit. The operating station may be located outside of an operational perimeter of the underfloor wheelset inspection device. This ensures safe operation by a user.

The first wheel lifting unit and the second wheel lifting unit are configured to lift and rotate the wheels of the corresponding wheelset. That means that the respective lifting unit elevates the corresponding wheel from the ground such that there is a distance between the ground and the wheel. Said ground may be a surface of a railway track. The wheel may be rotated clockwise or counterclockwise. The wheel lifting units may comprise an actuator for lifting the respective wheel. Said actuator may be a hydraulic lifting module. It may comprise at least one hydraulic cylinder. Further, the wheel is rotated around an axis formed by the axle. At least one of the lifting units of the same wheel inspection unit may include a motor for rotating the corresponding wheel (and hence the axle). The motor may be a hydraulic motor.

The movement device of the probe unit moves the sensor of the probe unit between a left sensing position and a right sensing position. The sensing positions are in proximity to a running tread of the respective left wheel and right wheel, wherein the sensor is considered to be in proximity to a running tread when the sensor abuts the running tread or is located in a position that is less than 50 cm from the running tread, preferably located less than 10 cm from the running tread. In the sensing position, the sensor may encompass a portion of the running tread. In a preferred embodiment the sensor is considered to be in proximity to a running tread of the respective left wheel and right wheel, when the sensor is forced against the running tread.

As noted above, the second wheelset inspection unit may be displaced from the first wheelset inspection unit in the rail direction by the longitudinal distance. In one embodiment, the longitudinal distance is less than 10 meters.

According to one aspect, the underfloor wheelset inspection device may be adapted to vary the longitudinal distance. In other words, underfloor wheelset inspection device is adapted to adjust the longitudinal distance. By this, the underfloor wheelset inspection device can adapt to different axle spacings, e.g. different axle spacings of various types of bogies.

The underfloor wheelset inspection device may be configured to probe wheelsets with an axle spacing at least in the range from 280 cm to 350 cm. It may be configured to arbitrarily adjust the longitudinal distance in at least this range.

In a preferred embodiment, the first wheelset inspection unit includes a trolley for moving the first wheelset inspection unit perpendicular to the axle of the first wheelset and/or the second wheelset inspection unit includes a trolley for moving the second wheelset inspection unit perpendicular to the axle of the second wheelset; wherein the control unit is set up to operate the trolley(s). By including a trolley in either the first wheelset inspection unit or the second wheelset inspection unit, the distance between the first wheelset inspection unit and the second wheelset inspection unit in the direction perpendicular to the axles of the wheelsets can be adjusted. This allows to adjust the underfloor wheelset inspection device to be compatible to railway vehicles with different distances between the wheelsets. Further, a wheelset inspection unit including a trolley can consecutively move between multiple wheelsets and thus inspect multiple wheelsets of a railway vehicle without the need for moving the railway vehicle in the direction perpendicular to the axles of the wheelsets. By including a trolley in both the first wheelset inspection unit and the second wheelset inspection unit flexibility of the underfloor wheelset inspection device is further increased as both wheelset inspection units can be moved. Thus, the distance between the first wheelset inspection unit and the second wheelset inspection unit can be decreased and increased faster. Further, in case any of the first wheel lifting unit, the second wheel lifting unit or the probe unit of one of the wheelset inspection units becomes defective, the other wheelset inspection unit can be moved into a position that allows the other one of the wheelset inspection units to carry out inspection instead. Vice versa, the first wheelset inspection unit can be used as back-up for the second wheelset inspection unit.

The trolley may be comprised of a motorized platform. The trolley may also be configured to interact with guiding means located below the trolley, wherein the guiding means extend along the direction perpendicular to the axles of the wheelsets.

The underfloor wheelset inspection device further comprises a reference unit with a reference wheel, wherein the control unit is configured to operate the movement devices of the first wheelset inspection unit and the second wheelset inspection unit to move the corresponding sensor in proximity to the reference wheel for performing reference measurements with the sensors. The reference wheel serves as reference object with known characteristics. For instance a new wheel of a wheelset may be used as reference wheel. Thus, by including a reference wheel and moving the sensors to the respective reference positions in proximity to the reference wheel the sensor may be calibrated to a known standard. The reference positions for the two-sensors may be different.

The reference wheel may be used to determine and/or to increase the accuracy of the inspection.

In one embodiment, the movement device includes a robotic arm. Especially, it may consist of the robotic arm. The robotic arm can comprise multiple motorized joints. They may enable almost arbitrary translation of the free end of the robotic arm. Therefore, movements between different sensing positions and/or the reference positions can be achieved efficiently even in confined environments such as the underside of a railway vehicle. According to a different aspect of the present invention, the probe unit further comprises an environment sensor unit with a proximity sensor and/or a force sensor. The environment sensor collects data on the direct environment of the probe unit and thus makes it possible to detect obstacles and, if necessary, to enable maneuvering around them and/or to stop the movement of the movement device in the event of a possible collision. Furthermore, the force sensor allows to position the sensor in contact with another object, wherein the force exerted onto the object can be monitored and thus kept below, e.g. a damage threshold. Thus, damage to the probe unit and other objects can be effectively prevented. Furthermore, the force sensor may be used to monitor the force exerted by the sensor onto the tread of a wheel, such that during probing of the wheel a minimum contact force is not undercut and/or a maximum contact force is not exceeded. The force sensor may thereby measure the force in multiple directions, e.g. three directions, to guarantee the correct fit of the sensor to the tread of a wheel.

In one embodiment, the sensors comprise, respectively a vessel that is adapted for holding a fluid for immersing a wheel tread portion; and a sensor head that is arranged in the vessel wherein the sensor head is configured to emit and receive ultrasonic radiation. The use of ultrasonic technology enables a non-destructive inspection of the wheelsets. It is particularly advantageous that the ultrasonic waves penetrate the wheel and can thus also detect damage below the surface of the wheel, i.e. inside the wheel. This enables a reliable inspection of the wheels, especially of the treads. It also reveals damage that would not be detectable with, e.g. visible radiation. The sensor head may be arranged in the vessel such that when the vessel is filled with a fluid, the sensor head is covered with said fluid. Further, the vessel may comprise an opening configured to receive at least a section of the running tread of a wheel such that the section comes into contact with the fluid when the sensor is in a sensing position. In other words, the vessel can be configured that at least a (lower end) portion of the tread can be immersed into the fluid inside the vessel.

The probe unit may further comprise a fluid supply module to supply fluid to the vessel during operation. The fluid supply module may be further configured to store a predetermined volume of fluid and/or to filter fluid. In one embodiment, the fluid consists at least substantially of water.

Preferably the sensor heads are phased array ultrasonic probes. The use of a phased array ultrasonic probe increases resolution achieved by the sensor head as in contrast to a conventional ultrasonic probe with a single probe (also known as monolithic probes), an array of ultrasonic probes is used that can be electronically swept across an inspection without the need to physically move the probe. This reduces the time needed to perform an inspection of a wheel. In a preferred embodiment, the sensor head is a phased array ultrasonic probe that is set up and configured to sweep across the full width of the running tread of a wheel. The width of the running tread being the dimension of the running tread parallel to the axel of the wheelset.

In one embodiment, the vessel comprises a first dimension that is aligned parallel to the tread of the wheel during probing, and wherein a length in the first dimension does not exceed 30 cm, preferably does not exceed 15 cm. During sampling, the first dimension may be aligned parallel to the rail direction. The vessel having a reduced length in the first dimension reduces the overall volume of the vessel and thus the volume in which scattered ultrasound waves can be reflected back and forth in an uncontrolled manner. Since such scattered radiation cannot be unambiguously assigned, it generates an interfering background signal. By reducing the volume, the level of the background signal is also reduced and the quality of the measurement signal obtained is increased.

In one embodiment the first wheelset inspection unit includes a levelling unit that is configured to align the first wheel lifting unit such that an axis of rotation the first lifting unit is configured to rotate the left wheel around is parallel to the axle and to align the second wheel lifting unit such that an axis of rotation the second wheel lifting unit is configured to rotate the right wheel around is parallel to the axle and/or the second wheelset inspection unit includes a levelling unit that is configured to align the first wheel lifting unit such that an axis of rotation the first lifting unit is configured to rotate the left wheel around is parallel to the axle and to align the second wheel lifting unit such that an axis of rotation the second wheel lifting unit is configured to rotate the right wheel around is parallel to the axle. The levelling unit may therefore be set up to compensate for unevenness in the ground and/or differences in height in the ground compared to the supporting surface of the wheelset, e.g. a rail track. The levelling unit may be a platform that can adjust the alignment of the platform in all three spatial directions by means of one or more adjustment units on the underside that faces towards the ground. In this case, the underside can be in direct contact with the ground or in contact with another intermediate element.

The underfloor wheelset inspection device may further be configured to apply IoT-technology and/or Deep-Learning-technology, e.g. to enable remote control and/or for automatic predictions.

The above problem is further solved by a method for probing railway vehicle wheelsets using the underfloor wheelset inspection device as defined above, the method comprising the following steps:
S1: The first wheel lifting unit and the second wheel lifting unit of the first wheel inspection unit lift and rotate the respective left and right wheel of the first wheelset, and the first wheel lifting unit and the second wheel lifting unit of the second wheel inspection unit lift and rotate the respective left and right wheel of the second wheelset;
S2: The probe unit of the first wheel inspection unit moves the sensor to one of its left sensing position and its right sensing position and probes the running tread of the wheel for at least a full rotation of the wheel, and the probe unit of the second wheel inspection unit moves the sensor to one of its left sensing position and its right sensing position and probes the running tread of the wheel for at least a full rotation of the wheel;
S3: Thereafter, the probe unit of the first wheel inspection unit moves the sensor to the other one of its left sensing position and its right sensing position and probes the running tread of the wheel for at least a full rotation of the wheel, and the probe unit of the second wheel inspection unit moves the sensor to the other one of its left sensing position and its right sensing position and probes the running tread of the wheel for at least a full rotation of the wheel.

In other words, in Step S3, the probe unit of the first wheel inspection unit moves the sensor to the sensing position that has not been probed by the first wheel inspection unit in step S2, and the probe unit of the second wheel inspection unit moves the sensor to the sensing position that has not been probed by the second wheel inspection unit in step S2.

At least before step S2, between step S2 and step S3 or after step S3 a step S4 is included, step S4 being comprised of:
The probe unit of the first wheel inspection unit moves the sensor to the reference unit and performs a reference measurement, and/or the probe unit of the second wheel inspection unit moves the sensor to the reference unit and performs a reference measurement.

The modifications and advantages described regarding the device apply accordingly with regard to the method and vice versa.

The above and other objects, features and advantages of the present invention will become more apparent from the following description when taken in conjunction with the accompanying drawings, in which a preferred embodiment of the present invention is shown by way of an illustrative example.
- Figure 1: shows a perspective view of an embodiment of an underfloor wheelset inspection device according to the present invention;
- Figure 2: shows a schematic perspective view of parts of the embodiment shown in fig. 1.

In the figures, identical elements, identically acting elements, or elements of the same kind may be provided with the same reference numerals.

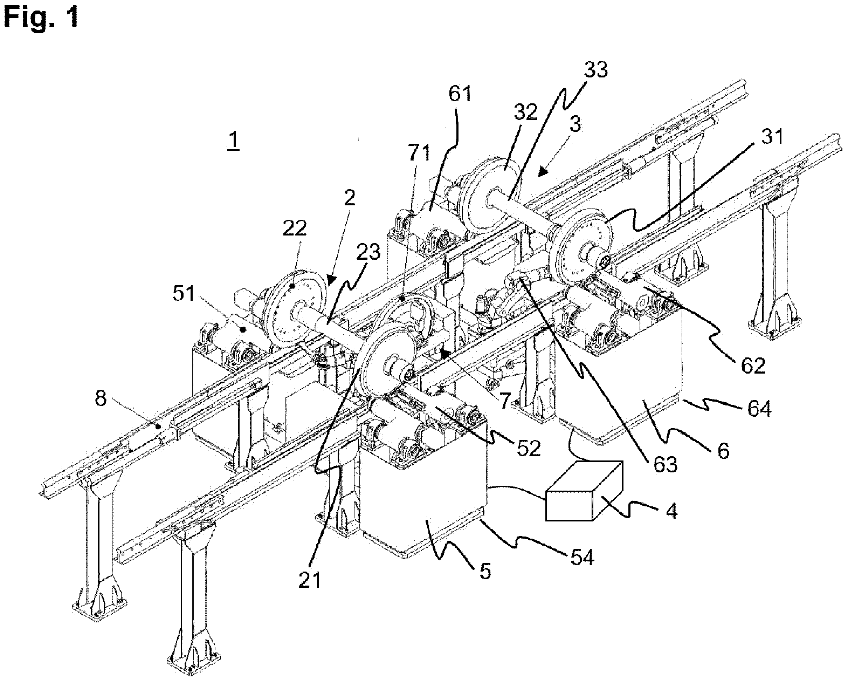

Fig. 1 shows an embodiment of the underfloor wheelset inspection device 1 according to the present invention. A first wheelset 2 and a second wheelset 3 are disposed on a rail track 8. The wheelsets 2, 3 may belong to the same bogie (not shown) of a rail vehicle. The wheelsets 2, 3 are each comprised of a right wheel 21, 31 and a left wheel 22, 32. The right and left wheels 21, 22, 31, 32 are formed as disk-shaped objects. The right wheel 21, 31 and the left wheel 22, 32 of the same wheelset 2, 3 are connected to each other by a corresponding axle 23, 33 disposed in the center of these wheels 21, 22, 31, 32. The axles 23, 33 connect the corresponding right wheel 21, 31 to the corresponding left wheel 22, 32 such that they are parallel to each other. Each wheel 21, 22, 31, 32 comprises a running tread 211, 221, 311, 321 that is formed at the outer circumference of the wheel 21, 22, 31, 32. The running treads 211, 221, 311, 321 form the sections of the wheelsets 2, 3 contacting the rail track 8. The first wheelset 2 and the second wheelset 3 are disposed on the rail track 8 with a distance from each other in the direction perpendicular to the axles 23, 33.

A first wheelset inspection unit 5 is located underneath the rail track 8 and the first wheelset 2. Similarly, a second wheelset inspection unit 6 is located underneath the rail track 8 with a distance from the first wheelset inspection unit 5 along the rail direction such that the second wheelset inspection unit 6 is located underneath the second wheelset 3.

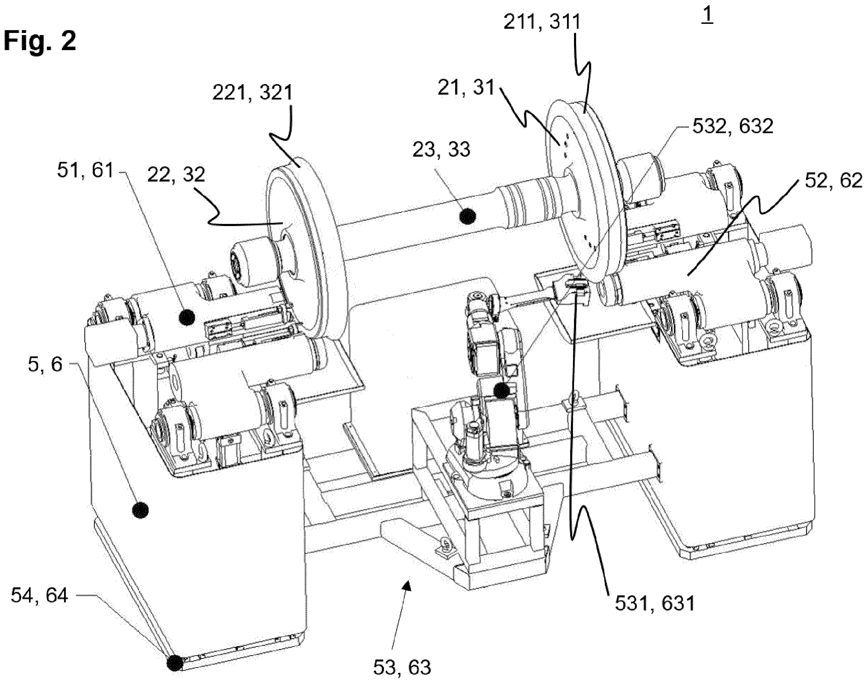

In this embodiment, each of the wheelset inspection units 5, 6 comprises two box-like shaped body parts that are connected by a frame structure, as shown in more detail in fig. 2. For inspection the first body part is disposed underneath the left wheels 22, 32, the frame structure is disposed underneath the axles 23, 33 and the second body part is disposed underneath the right wheels 21, 31. On the first body part the first wheelset lifting units 51, 61 is located, and on the second body part the second wheelset lifting unit 52, 62 is located.

In this embodiment, the wheelset lifting units 51, 52, 61, 62 are formed by a left motor unit and a right motor unit which can be pivoted about an axis parallel to the axle 23, 33 of the wheelsets 2, 3. As shown in fig. 2, the motor units are positioned on a left and right side at the lower half of a wheel 21, 22 and contact running treads of the wheel 211, 221. By performing a pivoting motion in an upward direction the motor units push onto the wheels 21, 22 so that the wheels 21, 22 are lifted off the rail track 8. The hydraulic lifting mechanism may comprise at least one hydraulic cylinder.

The motor units are additionally designed so that they can rotate the section which contacts the running tread separately 211, 221, 311, 321 about an axis parallel to the axle 23, 33 of the wheel sets 2, 3. When these sections are set in rotation, rotation is transmitted to the wheels 21, 22, 31, 32. In the arrangement described above, the left motor unit is set in rotation in one direction and the right motor unit is set in rotation in the opposite direction. In this process it is further advantageous if the first wheelset inspection unit 5 and the second wheelset inspection unit 6 rotate the wheels 21, 22, 31, 32 belonging to a wheelset 2, 3 in such a way that they rotate simultaneously and that a rotation of the left wheels 22, 32 and the right wheels 21, 31 is generated in the same direction of rotation around the axle 23, 33. Each of the motor units may comprise a hydraulic motor for rotating the corresponding wheel 21, 22, 31, 32.

On the frame structure of the wheelset inspection units 5, 6, a probe unit 53, 63 is formed. A movement device 532, 632 is connected to the frame structure at a first end and carries a sensor 531, 631 at a second end. The movement device 532, 632 is formed as a robotic arm that comprises multiple joints which are motorized using electric motors. Through actuation of the motors, the sensor 531, 631 can be moved freely in the three-dimensional space around the fixed end of the robotic arm within the reach of the robotic arm. As shown in Fig. 1, the robotic arm of the first wheelset inspection unit 5 moved the sensor 531 into a left sensing position. In Fig. 2 the sensor 531, 631 is shown close to a right sensing position. To make the sensing positions underneath the lifted wheels more accessible for the sensors 531, 631, after lifting the wheel 21, 22 ,31, 32, the part of the rail formerly located underneath is pulled back parallel to the track of the rail by means of a hydraulically controlled pull-back mechanism. Said mechanism is placed underneath each wheel 21, 22, 31, 32 to improve accessibility at all sensing positions. The short section of rail under the wheels 21, 22, 31, 32 is pulled back after the wheel 21. 22. 31. 32 is lifted and, when the inspection is complete, is returned to its original position before the wheel 21, 22, 31, 32 is lowered.

Below the box-like body parts of the wheelset inspection units 5, 6, a trolley 54, 64 is formed. Each of the wheelset inspection units 5, 6 is mounted on the corresponding trolley 54, 64. In this embodiment the trolley 54, 64 is a platform that is configured to glide along the ground by means of linear actuators and rails disposed on the underside of the platform. Further, sensors are disposed on the platform to track position changes of the platform.

A control unit 4 is located close to the wheel inspection units 5, 6. The control unit 4 connects through a wired connection to the wheel lifting units 51, 52, 61, 62, the probe units 53, 63 and the trolleys 54, 64, wherein the control unit 4 is configured to control said components of the wheel inspection units 5, 6 simultaneously.

Figure 1 further shows a reference unit 7 with a reference wheel 71 located between the first wheel inspection unit 5 and the second wheelset inspection unit 6. The reference wheel 71 is a wheel that is approximately of the dimensions of a wheel 21, 22, 31, 32 of the wheelsets 2, 3. The reference unit 7 is disposed between the wheelset inspection units 5, 6 such that the robotic arms may move the sensor 531, 631 into a reference position without the need to move wheelset inspection units 5, 6 itself relative to the reference unit 7 by means of the trolleys 54, 64.

In the following, the sequence of an inspection process is described by an underfloor wheelset inspection device 1 according to the embodiment shown in figs. 1 and 2.

The railway vehicle is positioned above the underfloor wheelset inspection device 1 in such a way that the wheelsets 2, 3 of the railway vehicle are arranged as shown in Fig. 1. In a case where the wheelsets 2, 3 are not positioned directly above the wheelset inspection units 5, 6, the wheelset inspection units 5, 6 are moved into such a position by means of its trolleys 54, 64.

In a first step, the first wheel lifting unit 5 and the second wheel lifting unit 6 simultaneously lift the respective wheelsets 2, 3 off the rail track 8. This is performed by the first wheel lifting units 51, 61 and the second wheel lifting units 51, 62 pivoting the left motor unit and the right motor unit to abut the running tread 211, 221, 311, 321 of the wheel 21, 22, 31, 32. The left and right motor unit are then pivoted upwards, i.e. in a direction away from the rail track 8, in a coordinated fashion to elevate the wheel 21, 22, 31, 32 from the rail track 8. The lifting of the wheels 21, 22, 31, 32 of a wheelset 2, 3 is performed simultaneously such that the wheelsets do not exhibit a tilt to either site of the rail track 8 during lifting. The lifted wheels 21, 22, 31, 32 are rotated by the corresponding first and second wheel lifting units 51, 52, 61, 62. In order to increase the space available underneath the raised wheels 21, 22 31, 32, short rail sections underneath the raised wheels 21, 22, 31, 32 are now moved parallel to the track of the rail track by means of the pull-back mechanisms.

The robotic arm of the probe unit 53 of the first wheelset inspection unit 5 moves the sensor 531 to the left sensing position in the proximity of the left wheel 22 of the first wheelset 2 as shown in fig. 1. The tread of the wheel 21 is probed by the sensor 531 for at least a full rotation of the wheel 22. Then the robotic arm moves the sensor 531 to the reference position in proximity of the reference wheel 71 to probe the reference wheel. Starting at the same time as the first wheelset inspection unit 5, the robotic arm of the probe unit 63 of the second wheelset inspection unit 6 moves the sensor 631 to the reference position in proximity of the reference wheel 71 to probe the reference wheel 71. Then the sensor 631 is moved to the left sensing position in the proximity of the left wheel 32 of the second wheelset 3. In that position, the tread of the wheel 321 is probed by the sensor 631 for at least a full rotation of the wheel 32. In that way the probe unit 53 of the first wheelset inspection unit 5 probes the wheel 22 at the left sensing position while the probe unit 63 of the second wheelset inspection unit 6 probes the reference wheel 71, and the probe unit 53 of the first wheelset inspection unit 5 probes the reference wheel 71 while the probe unit 63 of the second wheelset inspection unit 6 probes the wheel 32 the left sensing position. In the following, the probe unit 53 of the first wheelset inspection unit 5 is moved to its right sensing position to probe the running tread 211 of the right wheel 21 of the first wheelset 2, wherein the probe unit 63 of the second wheelset inspection unit 6 is moved to the reference position to probe the reference wheel 71. Lastly, the probe unit 53 of the fist wheelset inspection unit 5 is moved to the reference wheel 71, wherein the probe unit 63 of the second wheelset inspection unit 6 is moved to the right sensing position to probe the running tread 311 of the right wheel 31 of the second wheelset 3. The inspection procedure is concluded by moving both sensors 531, 631 to the reference position, closing the short rail sections underneath the raised wheels 21, 22, 31, 32, and lowering the wheelsets 2, 3 back onto the rail track 8. The sequence of the inspection process described above is not limited to this exact order. In principle, it is possible to approach the reference position before and/or after a sensing position. Furthermore, it is irrelevant in which order the left sensing position and the right sensing position are approached.

### Reference numerals:

- 1: underfloor wheelset inspection device
- 2: first wheelset
- 3: second wheelset
- 21, 31: right wheel
- 211, 311: running tread of the right wheel
- 22, 32: left wheel
- 221, 321: running tread of the left wheel
- 23, 33: axle
- 4: control unit
- 5: first wheelset inspection unit
- 6: second wheelset inspection unit
- 51, 61: first wheel lifting unit
- 52, 62: second wheel lifting unit
- 53, 63: probe unit
- 531, 631: sensor
- 532, 632: movement device
- 533, 633: environment sensor unit
- 54, 64: trolley
- 55, 65: levelling unit
- 7: reference unit
- 71: reference wheel
- 8: rail track

## Claims

1. An underfloor wheelset inspection device (1) for inspecting a first wheelset (2) and a second wheelset (3) of a railway vehicle, each wheelset (2, 3) comprising a right wheel (21, 31) and a left wheel (22, 32) connected by an axle (23, 33),
the underfloor wheelset inspection device (1) comprising:
a control unit (4),
a first wheelset inspection unit (5) for the first wheelset (2) and a second wheelset inspection (6) unit for the second wheelset (3), each of the wheelset inspection units (5, 6) comprising:
a first wheel lifting unit (51, 61) configured to lift and rotate the left wheel (22, 32) of the corresponding wheelset (2, 3);
a second wheel lifting unit (52, 62) configured to lift and rotate the right wheel (21, 31) of the corresponding wheelset (2, 3); and
a probe unit (53, 63) comprising a sensor (531, 631) and a movement device (532, 632) for moving the sensor (531, 631) between
• a left sensing position in proximity to a running tread of the left wheel (221, 321) when lifted by the first wheel lifting unit (51, 61) for probing the running tread of the left wheel (221, 321) and
• a right sensing position in proximity to a running tread of the right wheel (211, 311) when lifted by the second wheel lifting unit (52, 62) for probing the running tread of the right wheel (211, 311),
wherein the control unit (4) is operatively connected to the first wheelset inspection unit (5) and to the second wheelset inspection (6) unit and wherein the control unit (4) is suitable and set up to operate both probe units (53, 63) simultaneously to perform a probing of the running tread of a wheel (211, 311, 221, 321), wherein the underfloor wheelset inspection device (1) further comprises a reference unit (7) with a reference wheel (71), and
wherein the control unit (4) is configured to operate the movement devices (532, 632) of the first wheelset inspection unit (5) and the second wheelset inspection unit (6) to move the corresponding sensor (531, 631) in proximity to the reference wheel (71) for performing reference measurements with the sensors (531, 631).

2. The underfloor wheelset inspection device (1) according to claim 1, **characterized in that**
the first wheelset inspection unit (5) includes a trolley (54) for moving the first wheelset inspection unit (5) perpendicular to the axle (23) of the first wheelset (2) and/or
the second wheelset inspection unit (6) includes a trolley (64) for moving the second wheelset inspection unit (6) perpendicular to the axle (33) of the second wheelset (3); wherein
the control unit (4) is set up to operate the trolley(s) (54, 64).

3. The underfloor wheelset inspection device (1) according to any of the preceding claims, **characterized in that** the movement device (532, 632) includes a robotic arm.

4. A method for probing railway vehicle wheelsets using the underfloor wheelset inspection device (1) according to any of the preceding claims, the method comprising the following steps:
S1: The first wheel lifting unit (51) and the second wheel lifting unit (52) of the first wheel inspection unit (5) lift and rotate the respective left (22) and right wheel (21) of the first wheelset (2), and the first wheel lifting unit (61) and the second wheel lifting unit (62) of the second wheel inspection unit (6) lift and rotate the respective left (32) and right wheel (31) of the second wheelset (3);
S2: The probe unit (53) of the first wheel inspection unit (5) moves the sensor (531) to one of its left sensing position and its right sensing position and probes the running tread of the wheel (211, 221) for at least a full rotation of the wheel (21, 22), and the probe unit (63) of the second wheel inspection unit (6) moves the sensor (631) to one of its left sensing position and its right sensing position and probes the running tread (311, 321) of the wheel (31, 32) for at least a full rotation of the wheel (31, 32);
S3: Thereafter, the probe unit (53) of the first wheel inspection unit (5) moves the sensor (531) to the other one of its left sensing position and its right sensing position and probes the running tread (211, 221) of the wheel (21, 22) for at least a full rotation of the wheel, and the probe unit (63) of the second wheel inspection unit (6) moves the sensor (631) to the other one of its left sensing position and its right sensing position and probes the running tread (311, 321) of the wheel (31, 32) for at least a full rotation of the wheel (31, 32),
wherein at least before step S2, between step S2 and step S3 or after step S3 a step S4 is included, step S4 being comprised of:
The probe unit (53) of the first wheel inspection unit (5) moves the sensor (531) to the reference unit (7) and performs a reference measurement, and/or the probe unit (63) of the second wheel inspection unit (6) moves the sensor (631) to the reference unit (7) and performs a reference measurement.

## Patentansprüche

1. Eine Unterflur-Radsatzprüfvorrichtung (1) zum Prüfen eines ersten Radsatzes (2) und eines zweiten Radsatzes (3) eines Schienenfahrzeugs, wobei jeder Radsatz (2, 3) ein rechtes Rad (21, 31) und ein linkes Rad (22, 32) umfasst, die durch eine Achse (23, 33) verbunden sind,
die Unterflur-Radsatzprüfvorrichtung (1) umfasst:
eine Steuereinheit (4),
eine erste Radsatzprüfeinheit (5) für den ersten Radsatz (2) und eine zweite Radsatzprüfeinheit (6) für den zweiten Radsatz (3), wobei jede der Radsatzprüfeinheiten (5, 6) umfasst:
eine erste Radhebeeinheit (51, 61), die dazu eingerichtet ist, dass sie das linke Rad (22, 32) des korrespondierenden Radsatzes (2, 3) anhebt und dreht;
eine zweite Radhebeeinheit (52, 62), die dazu eingerichtet ist, dass sie das rechte Rad (21, 31) des korrespondierenden Radsatzes (2, 3) anhebt und dreht; und
eine Prüfeinheit (53, 63), die einen Sensor (531, 631) und eine Bewegungsvorrichtung (532, 632) zum Bewegen des Sensors (531, 631) zwischen
• einer linken Prüfposition in der Nähe einer Lauffläche des linken Rades (221, 321), wenn es von der ersten Radhebeeinheit (51, 61) angehoben wird, um die Lauffläche des linken Rades (221, 321) zu prüfen, und
• eine rechte Prüfposition in der Nähe einer Lauffläche des rechten Rades (211, 311), wenn es von der zweiten Radhebeeinheit (52, 62) angehoben wird, um die Lauffläche des rechten Rades (211, 311) zu prüfen,
wobei die Steuereinheit (4) mit der ersten Radsatzprüfeinheit (5) und der zweiten Radsatzprüfeinheit (6) operativ verbunden ist und wobei die Steuereinheit (4) geeignet und eingerichtet ist, beide Prüfeinheiten (53, 63) gleichzeitig zu betreiben, um ein Prüfen der Lauffläche eines Rades (211, 311, 221, 321) durchzuführen, wobei die Unterflur-Radsatzprüfvorrichtung (1) ferner eine Referenzeinheit (7) mit einem Referenzrad (71) umfasst, und
wobei die Steuereinheit (4) dazu eingerichtet ist, dass sie die Bewegungsvorrichtungen (532, 632) der ersten Radsatzprüfeinheit (5) und der zweiten Radsatzprüfeinheit (6) ansteuert, um den entsprechenden Sensor (531, 631) in die Nähe des Referenzrads (71) zu bewegen, um mit den Sensoren (531, 631) Referenzmessungen durchzuführen.

2. Die Unterflur-Radsatzprüfvorrichtung (1) gemäß Anspruch 1, **dadurch gekennzeichnet, dass**
die erste Radsatzprüfeinheit (5) ein Fahrgestell (54) zum Bewegen der ersten Radsatzprüfeinheit (5) senkrecht zur Achse (23) des ersten Radsatzes (2) umfasst und/oder
die zweite Radsatzprüfeinheit (6) ein Fahrgestell (64) zum Bewegen der zweiten Radsatzprüfeinheit (6) senkrecht zur Achse (33) des zweiten Radsatzes (3) umfasst; wobei
die Steuereinheit (4) so eingerichtet ist, dass sie das/die Fahrgestell(e) (54, 64) ansteuert.

3. Die Unterflur-Radsatzprüfvorrichtung (1) gemäß einem der vorstehenden Ansprüche, **dadurch gekennzeichnet, dass** die Bewegungsvorrichtung (532, 632) einen Roboterarm umfasst.

4. Ein Verfahren zum Prüfen von Eisenbahnfahrzeugradsätzen unter Verwendung der Unterflur-Radsatzprüfvorrichtung (1) gemäß einem der vorstehenden Ansprüche, wobei das Verfahren die folgenden Schritte umfasst:
S1: Die erste Radhebeeinheit (51) und die zweite Radhebeeinheit (52) der ersten Radsatzprüfeinheit (5) heben und drehen das jeweilige linke (22) und rechte Rad (21) des ersten Radsatzes (2), und die erste Radhebeeinheit (61) und die zweite Radhebeeinheit (62) der zweiten Radsatzprüfeinheit (6) heben und drehen das jeweilige linke (32) und rechte Rad (31) des zweiten Radsatzes (3);
S2: Die Prüfeinheit (53) der ersten Radsatzprüfeinheit (5) bewegt den Sensor (531) zu seiner linken Prüfposition oder seiner rechten Prüfposition und prüft die Lauffläche des Rades (211, 221) für mindestens eine volle Umdrehung des Rades (21, 22), und die Prüfeinheit (63) der zweiten Radsatzprüfeinheit (6) bewegt den Sensor (631) zu seiner linken Prüfposition oder seiner rechten Prüfposition und prüft die Lauffläche (311, 321) des Rades (31, 32) für mindestens eine volle Umdrehung des Rades (31, 32);
S3: Danach bewegt die Prüfeinheit (53) der ersten Radsatzprüfeinheit (5) den Sensor (531) zu seiner anderen der linken oder rechten Prüfposition und prüft die Lauffläche (211, 221) des Rades (21, 22) für mindestens eine volle Umdrehung des Rades, und die Prüfeinheit (63) der zweiten Radsatzprüfeinheit (6) bewegt den Sensor (631) zu seiner anderen der linken oder rechten Prüfposition und prüft die Lauffläche (311, 321) des Rades (31, 32) für mindestens eine volle Umdrehung des Rades (31, 32),
wobei zumindest vor dem Schritt S2, zwischen dem Schritt S2 und dem Schritt S3 oder nach dem Schritt S3 ein Schritt S4 eingeschlossen ist, wobei der Schritt S4 umfasst:
Die Prüfeinheit (53) der ersten Radsatzprüfeinheit (5) bewegt den Sensor (531) zu der Referenzeinheit (7) und führt eine Referenzmessung durch, und/oder die Prüfeinheit (63) der zweiten Radsatzprüfeinheit (6) bewegt den Sensor (631) zu der Referenzeinheit (7) und führt eine Referenzmessung durch.

## Revendications

1. Dispositif d'inspection d'essieux montés au sol (1) destiné à inspecter un premier essieu monté (2) et un second essieu monté (3) d'un véhicule ferroviaire, chaque essieu monté (2, 3) comprenant une roue droite (21, 31) et une roue gauche (22, 32) reliées par un essieu (23, 33),
le dispositif de contrôle des essieux montés au sol (1) comprenant :
un boîtier de commande (4),
une première unité d'inspection d'essieux montés (5) pour le premier essieu monté (2) et une seconde unité d'inspection d'essieux montés (6) pour le second essieu monté (3), chacune des unités d'inspection d'essieux montés (5, 6) comprenant :
une première unité de levage de roues (51, 61) configurée pour soulever et faire tourner la roue gauche (22, 32) de l'essieu monté (2, 3) concerné ;
une seconde unité de levage de roues (52, 62) configurée pour soulever et faire tourner la roue droite (21, 31) de l'essieu monté correspondant (2, 3) ; et
une unité de sondage (53, 63) comprenant un capteur (531, 631) et un dispositif de déplacement (532, 632) permettant de déplacer le capteur (531, 631) entre
• une position de détection gauche à proximité d'une bande de roulement de la roue gauche (221, 321) lorsqu'elle est soulevée par la première unité de levage de roues (51, 61) pour sonder la bande de roulement de la roue gauche (221, 321) et
• une position de détection droite à proximité d'une bande de roulement de la roue droite (211, 311) lorsqu'elle est soulevée par la seconde unité de levage de roues (52, 62) pour sonder la bande de roulement de la roue droite (211, 311),
l'unité de commande (4) étant reliée de manière fonctionnelle à la première unité d'inspection d'essieux montés (5) et à la seconde unité d'inspection d'essieux montés (6) et l'unité de commande (4) étant adaptée et configurée pour actionner simultanément les deux unités de sondage (53, 63) pour effectuer un sondage de la bande de roulement d'une roue (211, 311, 221, 321),
le dispositif d'inspection d'essieux montés au sol (1) comprenant en outre une unité de référence (7) avec une roue de référence (71), et
l'unité de commande (4) étant configurée pour actionner les dispositifs de déplacement (532, 632) de la première unité d'inspection d'essieux montés (5) et de la seconde unité d'inspection d'essieux montés (6) pour déplacer le capteur correspondant (531, 631) à proximité de la roue de référence (71) afin d'effectuer des mesures de référence avec les capteurs (531, 631).

2. Dispositif d'inspection d'essieux montés au sol (1) selon la revendication 1, **caractérisé en ce que**
la première unité d'inspection d'essieux montés (5) comprend un chariot (54) pour déplacer la première unité d'inspection d'essieux montés (5) perpendiculairement à l'essieu (23) de la première unité d'inspection d'essieux montés (2) et/ou
la seconde unité d'inspection d'essieux montés (6) comprend un chariot (64) destiné à déplacer la seconde unité d'inspection d'essieux montés (6) perpendiculairement à l'essieu (33) du second essieu monté (3) ;
l'unité de commande (4) est conçue pour actionner le ou les chariots (54, 64).

3. Dispositif d'inspection d'essieux montés au sol (1) selon l'une quelconque des revendications précédentes, **caractérisé en ce que** le dispositif de déplacement (532, 632) comprend un bras robotisé.

4. Procédé pour sonder des essieux montés de véhicules ferroviaires en utilisant le dispositif d'inspection d'essieux montés au sol (1) selon l'une quelconque des revendications précédentes, le procédé comprenant les étapes suivantes :
S1 : La première unité de levage de roues (51) et la seconde unité de levage de roues (52) de la première unité d'inspection de roue (5) soulèvent et font tourner les roues gauche (22) et droite (21) correspondantes du premier essieu monté (2), et la première unité de levage de roues (61) et la seconde unité de levage de roues (62) de la seconde unité d'inspection de roues (6) soulèvent et font tourner les roues gauche (32) et droite (31) correspondantes du second essieu monté (3) ;
S2 : L'unité de sondage (53) de la première unité d'inspection de roues (5) déplace le capteur (531) vers l'une de ses positions de détection gauche et droite et sondage la bande de roulement de la roue (211, 221) sur au moins une rotation complète de la roue (21, 22), et l'unité de sondage (63) de la seconde unité d'inspection de roues (6) déplace le capteur (631) vers l'une de ses positions de détection gauche et droite et sondage la bande de roulement (311, 321) de la roue (31, 32) sur au moins une rotation complète de la roue (31, 32) ;
S3 : Ensuite, l'unité de sondage (53) de la première unité d'inspection de roues (5) déplace le capteur (531) vers l'autre position de détection gauche et droite et sondage la bande de roulement (211, 221) de la roue (21, 22) sur au moins une rotation complète de la roue, et l'unité de sondage (63) de la seconde unité d'inspection de roues (6) déplace le capteur (631) vers l'autre position de détection gauche et droite et sondage la bande de roulement (311, 321) de la roue (31, 32) sur au moins une rotation complète de la roue (31, 32),
au moins avant l'étape S2, entre l'étape S2 et l'étape S3 ou après l'étape S3, une étape S4 étant incluse, l'étape S4 comprenant le fait que :
l'unité de sondage (53) de la première unité d'inspection de roues (5) déplace le capteur (531) vers l'unité de référence (7) et effectue une mesure de référence, et/ou que l'unité de sondage (63) de la seconde unité d'inspection de roues (6) déplace le capteur (631) vers l'unité de référence (7) et effectue une mesure de référence.
